(19) **Europäisches Patentamt**
**European Patent Office**
**Office européen des brevets**

(11) **EP 1 458 461 B1**

(12) **FASCICULE DE BREVET EUROPEEN**

(45) Date de publication et mention
de la délivrance du brevet:
**24.01.2007 Bulletin 2007/04**

(21) Numéro de dépôt: **02804593.8**

(22) Date de dépôt: **20.11.2002**

(51) Int Cl.:
**B01D 53/04** (2006.01)    **B01D 53/047** (2006.01)
**C01B 3/56** (2006.01)

(86) Numéro de dépôt international:
**PCT/FR2002/003973**

(87) Numéro de publication internationale:
**WO 2003/049839 (19.06.2003 Gazette 2003/25)**

(54) **PROCEDE DE TRAITEMENT PAR ADSORPTION D'UN MELANGE GAZEUX**

VERFAHREN ZUR BEHANDLUNG EINES GASGEMISCHES DURCH ADSORPTION

METHOD FOR TREATING A GAS MIXTURE BY ADSORPTION

(84) Etats contractants désignés:
**AT BE BG CH CY CZ DE DK EE ES FI FR GB GR
IE IT LI LU MC NL PT SE SK TR**

(30) Priorité: **12.12.2001 FR 0116041**

(43) Date de publication de la demande:
**22.09.2004 Bulletin 2004/39**

(73) Titulaire: **L'AIR LIQUIDE, Société Anonyme à
Directoire et
Conseil de Surveillance pour l'Etude et
l'Exploitation des
75321 Paris Cedex 07 (FR)**

(72) Inventeur: **MONEREAU, Christian**
**F-75011 Paris (FR)**

(74) Mandataire: **Le Moenner, Gabriel**
**L'AIR LIQUIDE**
**75, Quai d'Orsay**
**75321 Paris Cédex 07 (FR)**

(56) Documents cités:
**EP-A- 0 411 506**      **EP-A- 0 925 821**
**EP-A- 1 004 343**      **US-B1- 6 315 818**
**US-B1- 6 322 611**

## Description

La présente invention concerne un procédé de traitement par adsorption d'un mélange gazeux comportant au moins un constituant principal à produire et des impuretés à séparer dudit mélange, notamment pour la production de monoxyde de carbone avec flux à ratios hydrogène/monoxyde de carbone prédéterminés.

Dans toute la suite, les pressions gazeuses sont indiquées en bars absolus.

Un tel procédé de traitement est très utilisé pour séparer des constituants "nobles" à produire et contenus dans le mélange gazeux, de constituants non désirés, généralement désignés par le terme "d'impuretés".

Le procédé est cyclique et met en oeuvre au moins deux adsorbeurs, ou deux unités d'adsorption à respectivement plusieurs adsorbeurs à marche commune, qui suivent en décalage un même cycle de fonctionnement. Ce cycle comporte classiquement une phase d'adsorption durant laquelle l'adsorbeur correspondant est soumis au mélange gazeux et en adsorbe les impuretés, et une phase de regénération durant laquelle l'adsorbeur est soumis à un gaz de regénération et se désorbe des impuretés qu'il a précédemment adsorbées.

Selon que la phase de regénération s'accompagne ou non d'un chauffage du gaz de régénération, il est courant de distinguer des cycles dit "TSA" (Temperature Swing Adsorption) et des cycles dits "PSA" (Pressure Swing Adsorption).

Il est par ailleurs connu que les adsorbeurs peuvent être soumis à des étapes de dépressurisation et de repressurisation, ainsi qu'à une mise en parallèle des adsorbeurs, durant laquelle le flux total de gaz traité est obtenu à la fois par le traitement d'un premier débit de gaz par au moins un adsorbeur terminant sa phase d'adsorption et par le traitement d'un second débit de gaz à traiter par au moins un autre adsorbeur commençant sa phase d'adsorption. Cette mise en parallèle est classiquement destinée à éviter des à-coups de pression dans le flux de gaz traité lors du passage en production d'un adsorbeur à l'autre, notamment pour prendre en compte le temps de manoeuvre des vannes établissant la mise en parallèle.

Cependant, les cycles de traitement par adsorption présentent des inconvénients lors de périodes transitoires au début des phases d'adsorption et de régénération, comme en partie expliqué dans le document EP-A-0 748 765.

Ce dernier décrit une installation de production de monoxyde de carbone, comportant une unité cryogénique de production et en amont de celle-ci, une unité de traitement mettant en oeuvre un procédé du type défini plus haut. Cette installation est destinée à retenir l'eau et le dioxyde de carbone d'un mélange gazeux riche en monoxyde de carbone et en hydrogène issu d'un reformage à la vapeur d'hydrocarbures. La fixation du monoxyde de carbone par le matériau adsorbant de l'adsorbeur qui débute sa phase d'adsorption provoque une baisse sensible de la teneur en monoxyde de carbone du flux en sortie de cet adsorbeur, ainsi que des fluctuations du débit de ce flux. La solution proposée dans EP-A-0 748 765 consiste à interposer entre l'unité de traitement à adsorption et l'unité cryogénique de production de monoxyde de carbone un réservoir rempli d'un matériau adsorbant présentant une affinité pour le monoxyde de carbone.

Cette solution s'avère particulièrement coûteuse en investissement, peu modulable et ne s'intéresse qu'à la période transitoire lors de la remise en production de chaque adsorbeur, alors que des phénomènes transitoires analogues surviennent lors du début de la phase de régénération de chaque adsorbeur, le flux sortant des adsorbeurs présentant de fortes fluctuations en teneur et en débit.

L'invention a pour but de proposer un procédé du type définit plus haut, qui soit facilement mis en oeuvre sur les installations de traitement de l'art antérieur et qui permette de s'affranchir des perturbations de flux dues aux transitions de phases d'adsorption et de régénération des cycles de procédés connus.

A cet effet, l'invention a pour objet un procédé du type précité, dans lequel on utilise N adsorbeurs, avec N supérieur ou égal à deux, qui suivent chacun en décalage un même cycle de période T durant lequel se succèdent une phase d'adsorption et une phase de régénération utilisant un gaz de régénération, et dans lequel on soumet chaque adsorbeur en début de phase d'adsorption et/ou en début d'utilisation du gaz de régénération, à seulement une partie du débit nominal du mélange gazeux à traiter, respectivement du débit nominal du gaz de régénération, jusqu'à ce que ledit adsorbeur soit sensiblement saturé, respectivement soit sensiblement déchargé, en au moins un des constituants principaux à produire, tout en maintenant au moins un autre adsorbeur en phase d'adsorption.

L'invention a ainsi pour objet un premier procédé de traitement par adsorption d'un mélange gazeux comportant au moins un constituant principal à produire et des impuretés à séparer dudit mélange, dans lequel on utilise N adsorbeurs, avec N supérieur ou égal à deux, qui suivent chacun en décalage un même cycle de période T, durant lequel se succèdent une phase d'adsorption et une phase de régénération, et on soumet chaque adsorbeur (11 A) en début de phase d'adsorption (étapes I ou IV) à seulement une partie du débit nominal du mélange gazeux à traiter, jusqu'à ce que ledit adsorbeur soit sensiblement saturé en au moins un des constituants principaux à produire, tout en maintenant au moins un autre adsorbeur (11 B) en phase d'adsorption.

Suivant d'autres caractéristiques de ce procédé :

- pour former le mélange gazeux traité, on mélange le flux issu de l'adsorbeur soumis à ladite partie avec le flux issu dudit au moins un autre adsorbeur en phase d'adsorption ;

- la durée de la phase d'adsorption de chaque adsorbeur est comprise entre $\dfrac{T}{N}$ inclus et $\dfrac{2T}{N}$ non-inclus ;

- le traitement par adsorption du mélange gazeux est effectué, la majeure partie du temps, par un seul adsorbeur en phase d'adsorption ; et

- après avoir soumis à ladite partie du débit nominal du mélange gazeux à traiter ledit adsorbeur en début de phase d'adsorption, on soumet ledit adsorbeur à une étape de mise en parallèle durant laquelle le débit de gaz traité est obtenu pour moitié par ledit adsorbeur et pour moitié par ledit au moins un autre adsorbeur en phase d'adsorption.

L'invention a également pour objet un second procédé de traitement par adsorption d'un mélange gazeux comportant au moins un constituant principal à produire et des impuretés à séparer dudit mélange, dans lequel on utilise N adsorbeurs, avec N supérieur ou égal à deux, qui suivent chacun en décalage un même cycle de période T, durant lequel se succèdent une phase d'adsorption et une phase de régénération utilisant un gaz de régénération, et on soumet chaque adsorbeur en début d'utilisation du gaz de régénération à seulement une partie du débit nominal du gaz de régénération, jusqu'à ce que ledit adsorbeur soit sensiblement déchargé au moins un des constituants principaux à produire.

Suivant d'autres caractéristiques de ce second procédé :

- pour former un flux gazeux évacué, on mélange le flux issu de l'adsorbeur soumis à ladite partie avec le reste du débit nominal du gaz de régénération ;

- le flux issu de l'adsorbeur soumis à ladite partie et le reste du débit nominal du gaz de régénération sont directement mélangés ;

- le flux issu de l'adsorbeur soumis à ladite partie est mélangé avec le flux issu d'un autre adsorbeur qui termine sa phase de régénération et qui est soumis à au moins une partie du reste du débit nominal de gaz de régénération ;

- la phase de régénération de chaque adsorbeur comporte une étape de dépressurisation et une étape de repressurisation dudit adsorbeur ; et

- la phase de régénération de chaque adsorbeur comporte une étape de chauffage du gaz de régénération.

L'invention sera mieux comprise à la lecture de la description qui va suivre, donnée uniquement à titre d'exemple et faite en se référant aux dessins sur lesquels :

- la figure 1 est une vue schématique d'une installation de production de monoxyde de carbone selon l'invention associée à une unité de production d'hydrogène pur ;

- la figure 2 est un diagramme illustrant le cycle de fonctionnement des adsorbeurs de l'installation de la figure 1 ;

- les figures 3 et 4 sont des vues schématiques de l'installation de la figure 1 pour des intervalles de temps repérés par les numéros I et VI sur le cycle de la figure 2 ; et

- la figure 5 est une vue schématique d'une installation de production d'un flux de ratio hydrogène/monoxyde de carbone prédéterminé selon l'invention associée à une unité de production d'hydrogène pur.

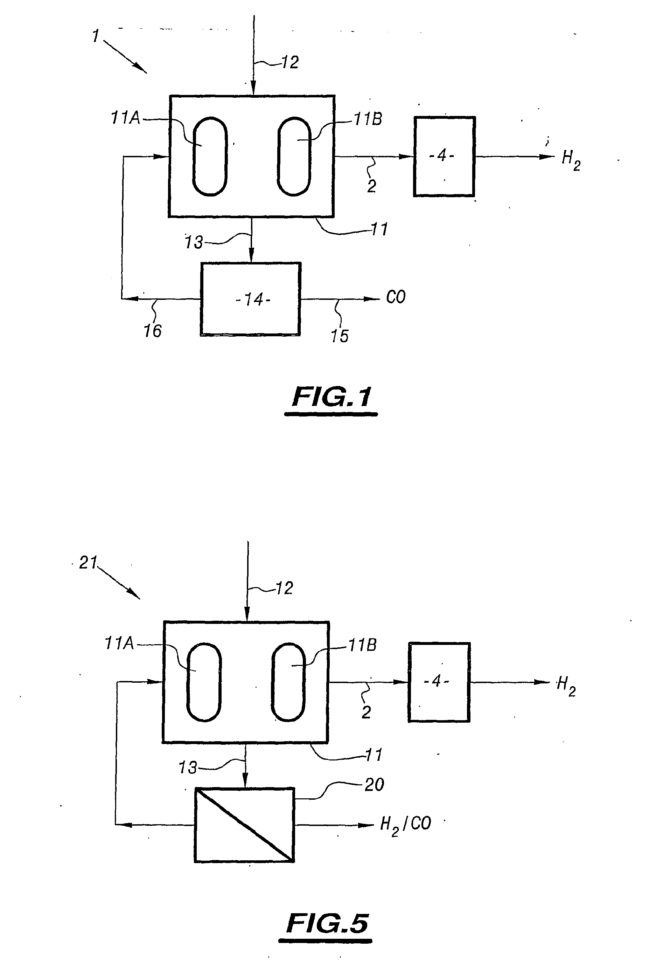

Sur la figure 1 est représentée une installation 1 de production de monoxyde de carbone, raccordée en aval, via une conduite 2, à une unité 4 de production d'hydrogène.

L'installation 1 comporte en amont une unité 11 de traitement par adsorption adaptée pour éliminer la majorité des impuretés, notamment l'eau et le dioxyde de carbone, contenues dans un mélange gazeux amené par une ligne d'alimentation 12 et comprimé à une pression comprise entre 15 et 45 bars. Ce mélange gazeux est comprimé par exemple sous 15,5 bars et présente un débit nominal, à savoir le débit total de la ligne 12, compris entre quelques centaines et plusieurs dizaines de milliers de Nm$^3$/h. Ce mélange gazeux comporte comme constituants principaux de l'hydrogène et du monoxyde de carbone, à respectivement 73,5 et 21,6% molaire, ainsi qu'éventuellement des constituants secondaires, tels que de l'azote et du méthane, par exemple à des teneurs respectives de 1,1 et 3,8% molaire, et contient comme impuretés entre 10 et 200 ppm (partie par million) molaire de dioxyde de carbone, ainsi que de l'eau, généralement à saturation.

L'unité 11 comporte deux adsorbeurs 11A, 11B mis en ligne de façon alternée pour assurer l'épuration par adsorption du mélange gazeux. Chaque adsorbeur comporte un matériau adsorbant disposé soit sous forme d'un lit unique constitué de zéolite ou d'alumine activée éventuellement dopée pour augmenter sa capacité d'arrêt du dioxyde de carbone, soit sous forme d'une pluralité de lits constitués respectivement d'alumine activée ou de gel de silice pour arrêter essentiellement l'eau, et de zéolite (par exemple de type A, X ou LSX) pour arrêter essentiellement le dioxyde de carbone. Le matériau adsorbant peut également être constitué de mélanges d'adsorbants ou d'adsorbants composites.

L'unité de traitement 11 comporte également des vannes et des conduites de raccordement non représentées sur la figure 1, mais dont la disposition apparaîtra plus clairement lors de la description du fonctionnement de cette unité.

L'installation 1 comporte, raccordée par une ligne 13 en aval de l'unité de traitement 11, une unité de séparation cryogénique 14 qui comprend une ligne 15 de production de monoxyde de carbone sensiblement pur et une ligne 16 de sortie d'un flux à forte teneur en hydrogène. Pour la composition du mélange gazeux indiqué ci-dessus, le flux de la ligne 16 peut contenir 97,4% molaire d'hydrogène, 0,3% molaire d'azote, 0,3% de monoxyde de carbone et 2% molaire de méthane, sous environ 14, 5 bars. Cette unité de séparation 14 étant connue en soi, elle ne sera pas détaillée plus avant.

La ligne 16 est raccordée à l'unité de traitement 11 pour permettre la régénération de l'adsorbeur 11 A, 11 B qui n'est pas en ligne de production, le flux à forte teneur en hydrogène de la ligne 16 étant utilisé, au moins en partie, comme gaz de régénération du matériau adsorbant de cet adsorbeur. Le débit total de la tige 16 forme, pour l'exemple représenté, le débit nominal du gaz de régénération.

Le gaz de régénération en sortie de l'unité de traitement par adsorption est acheminé par la ligne 2 à l'unité de production d'hydrogène 4, connue en soi. Cette unité 4 peut par exemple comporter six adsorbeurs fonctionnant cycliquement et adaptés pour produire un flux d'hydrogène sensiblement pur.

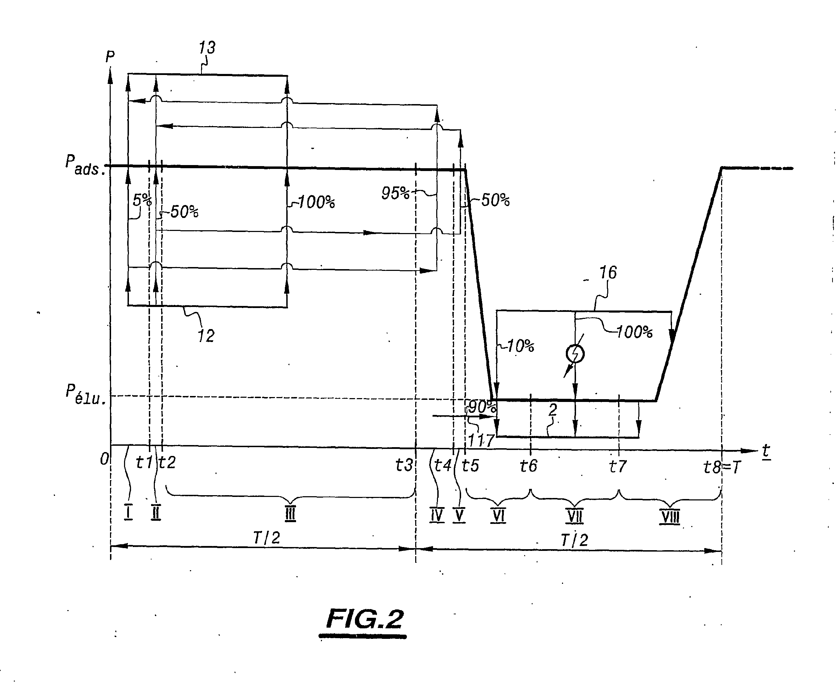

Le procédé mis en oeuvre par l'unité de traitement par adsorption 11 est obtenu par répétition d'un cycle illustré sur la figure 2. Chacun des deux adsorbeurs 11 A, 11 B suit le cycle de la figure 2, en décalage temporel par rapport à l'autre d'un intervalle de temps valant sensiblement la moitié de la période T du cycle.

Sur la figure 2, où les temps t sont portés en abscisses et les pressions absolues P en ordonnées, les traits orientés par des flèches indiquent les mouvements et destinations des courants gazeux, et, en outre, le sens de circulation dans respectivement les adsorbeurs 11 A et 11 B. Lorsqu'une flèche est dans le sens des ordonnées croissantes (vers le haut du diagramme), le courant est dit à co-courant dans l'adsorbeur ; si la flèche dirigée vers le haut est située au-dessous du trait indiquant la pression dans l'adsorbeur, le courant pénètre dans l'adsorbeur à l'extrémité d'entrée de l'adsorbeur ; si la flèche dirigée vers le haut est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production. Lorsqu'une flèche est dans le sens des ordonnées décroissantes (vers le bas du diagramme), le courant est dit à contre-courant dans l'adsorbeur ; si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Le cycle de la figure 2 comporte huit étapes successives, notées I à VIII, qui vont successivement être décrites en considérant par exemple qu'à l'instant t =0, l'adsorbeur 11A commence sa phase d'adsorption.

La période T du cycle est, à titre d'exemple, égale à 960 minutes pour une pression d'adsorption $P_{ads}$ d'environ 15,5 bars.

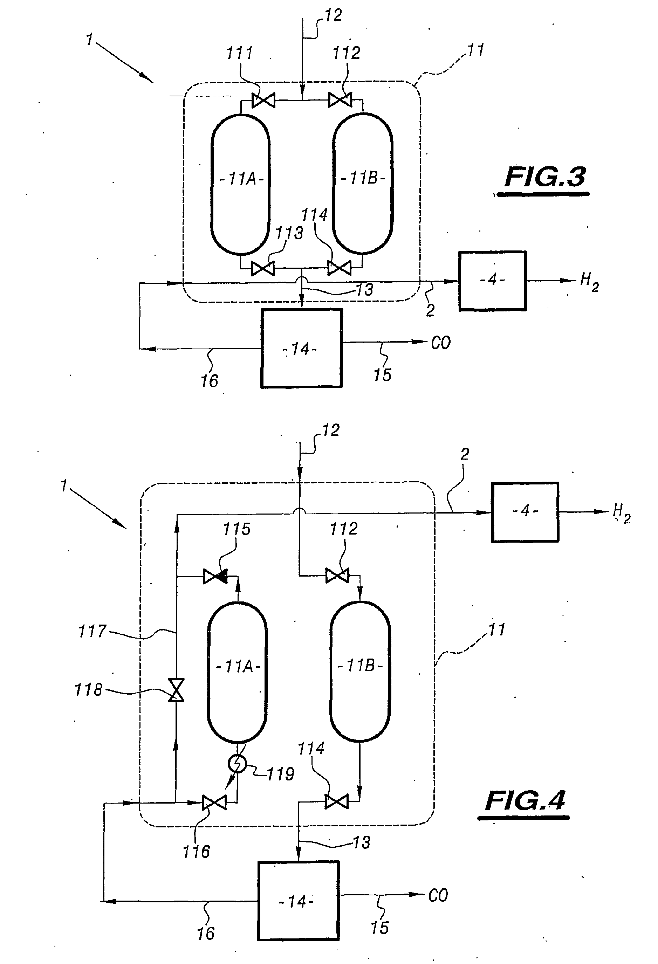

Lors de l'étape I, c'est-à-dire de t=0 à $t_1$=35 minutes, les adsorbeurs 11 A et 11B sont en phase d'adsorption comme représenté sur la figure 3, l'adsorbeur 11 A ne recevant que 5% du débit du mélange gazeux de la ligne 12, via une vanne 111 de régulation du débit qui la traverse, et l'adsorbeur 11 B recevant les 95% du débit nominal restant, via une vanne de régulation 112.

Durant cette étape, l'adsorbeur 11A nouvellement régénéré arrête, en plus des impuretés (eau et dioxyde de carbone), le monoxyde de carbone contenu dans le mélange gazeux, en raison de l'affinité chimique de son matériau adsorbant avec le monoxyde de carbone. Aussi, le flux épuré issu de l'adsorbeur 11 A, qui emprunte une vanne ouverte 113, est pratiquement exempt de monoxyde de carbone. Pour la composition du mélange gazeux indiquée plus haut, la teneur en hydrogène de ce flux sortant de l'adsorbeur 11 A peut atteindre plus de 90% molaire. De façon concomitante, le matériau adsorbant de l'adsorbeur 11B qui a été saturé en monoxyde de carbone préalablement à l'étape I, n'adsorbe que les impuretés des 95% du mélange gazeux qui lui sont envoyés et produit un flux épuré via une vanne ouverte 114. Les flux des vannes 113 et 114 se mélangent dans la conduite de raccordement 13 de sorte que les teneurs de ce mélange en monoxyde de carbone et en hydrogène soient très proches de leur valeur nominale, c'est-à-dire très proches par exemple des teneurs du flux de cette conduite 13 lors de l'étape précédant l'étape I, le flux issu de l'adsorbeur 11A de faible débit et pauvre en monoxyde de carbone se diluant dans le flux issu de l'adsorbeur 11B.

Cette étape I s'achève lorsque la majeure partie, voire la totalité, du matériau adsorbant de l'adsorbeur 11A est saturée en monoxyde de carbone.

Lors de l'étape II, c'est-à-dire de t1 à t2 = 45 minutes, les adsorbeurs 11 A et 11B demeurent en phase d'adsorption mais sont soumis respectivement à environ 50% du débit nominal du mélange gazeux à épurer, les vannes 111 et 112 étant commandées en conséquence. Cette étape II s'apparente à une mise en parallèle à répartition symétrique du mélange gazeux d'alimentation, telle qu'évoquée dans le préambule de la demande. Cette mise en parallèle permet avantageusement un ajustement thermique du flux épuré de la conduite 13, le flux sortant de l'adsorbeur 11A nouvellement régénéré ayant tendance à être plus chaud que celui de l'adsorbeur 11 B en fin de phase d'adsorption.

Lors de l'étape III, c'est-à-dire de t2 à t3 = $\dfrac{T}{2}$ = 480 minutes, seul l'adsorbeur 11A est en phase d'adsorption, la vanne 111 étant totalement ouverte, et l'adsorbeur 11 B passe en phase de régénération, les vannes 112 et 114 étant totalement fermées. Ainsi, pendant la majeure partie du temps de fonctionnement de l'unité de traitement 11 (ici, pendant plus de 90% de ce temps de fonctionnement), le traitement du mélange gazeux est assuré par le seul adsorbeur 11A.

Lors de l'étape IV, c'est-à-dire de t3 à t4 = 515 minutes, l'adsorbeur 11A est en fin de phase d'adsorption et l'adsorbeur 11B passe en phase d'adsorption, les adsorbeurs 11 A et 11 B étant respectivement soumis à 95% et à 5% du débit nominal du mélange gazeux, par l'intermédiaire du réglage correspondant des vannes 111 et 112, ainsi que par l'ouverture de la vanne 114. L'étape IV est donc similaire à l'étape I en inversant le rôle des adsorbeurs 11 A et 11 B.

De la même façon, l'étape V, c'est-à-dire l'intervalle entre t4 et t5=525 minutes, est similaire à l'étape II en inversant le rôle des adsorbeurs 11A et 11 B.

Lors de l'étape VI, c'est-à-dire de t5 à t6 = 630 minutes, l'adsorbeur 11A passe en phase de régénération, l'épuration du mélange gazeux étant assurée en totalité par l'adsorbeur 11 B, comme-représenté sur la figure 4. L'adsorbeur 11A est raccordé en aval à la ligne 2 de raccordement avec l'unité de production d'hydrogène 4, via une vanne de détente 115. La pression dans l'adsorbeur 11 A passe alors de la pression $P_{ads}$ à une pression inférieure d'élution, notée $P_{élu}$ et de valeur adaptée au type de procédé mis en oeuvre dans l'unité de séparation cryogénique 14. Cette pression d'élution sera par exemple inférieure de 1 à 2 bar à la pression d'adsorption $P_{ads}$. Elle peut être également de valeur sensiblement plus basse, par exemple de l'ordre de 3 bar absolus.

De façon concomitante à cette dépressurisation ou une fois cette dernière terminée, l'adsorbeur 11A est soumis au flux riche en hydrogène (gaz de régénération) de la ligne 16, via une vanne 116 à régulation de débit la traversant.

Cette vanne 116 est commandée de façon à ce que seulement 10% du débit du flux de régénération provenant de la ligne 16 soient envoyés à contre-courant dans l'adsorbeur 11A, les 90% du débit nominal restant étant acheminés directement à la ligne de raccordement 2, via une ligne de dérivation 117 pourvue d'une vanne à régulation 118.

Durant l'application du gaz de régénération de cette étape VI, le matériau adsorbant de l'adsorbeur 11 A qui débute sa régénération est saturé en impuretés (eau et dioxyde de carbone) et en monoxyde de carbone. Les premiers instants de la régénération s'accompagnent d'une forte désorption du monoxyde de carbone, la teneur en monoxyde de carbone du flux issu de l'adsorbeur 11A pouvant atteindre plus de dix fois celle du flux de régénération de la ligne 16. Appliquée telle quelle à l'unité 4, notamment si cette dernière fonctionne par adsorption, cette bouffée brusque et intense de monoxyde de carbone entraînerait des perturbations de fonctionnement importantes qui conduiraient à une perte du rendement en hydrogène et/ou à une pollution de la production de l'unité 4. En revanche, par mélange du flux issu de l'adsorbeur 11 A à teneur élévée en monoxyde de carbone, avec le flux de régénération de la dérivation 117, dans des proportions respectives de 10 et 90%, la teneur en monoxyde de carbone du flux de la ligne de raccordement 2 reste à une valeur compatible avec les tolérances de fonctionnement de l'unité de production 4.

Cette étape VI se poursuit jusqu'à ce que le matériau adsorbant de l'adsorbeur 11 A soit sensiblement déchargé de la majeure partie du monoxyde de carbone.

Avantageusement, cette étape peut se poursuivre de manière à amortir les effets thermiques du début de régénération. En effet, le flux issu de l'adsorbeur 11A ayant tendance à être plus froid que la norme d'alimentation de l'unité 4, son mélange avec le flux plus chaud, par exemple de 20°C, de la ligne de dérivation 117 permet le lissage en température du flux de la ligne de raccordement 2.

Lors de l'étape VII, c'est-à-dire de t6 à t7 = 790 minutes, l'élution du matériau adsorbant de l'adsorbeur 11A se poursuit au moyen de la totalité du flux de régénération acheminé par la ligne 16, la vanne 116 étant totalement ouverte et la vanne 118 étant fermée. Avantageusement, le gaz de régénération est chauffé par un dispositif de chauffage 119.

Lors de l'étape VIII, c'est-à-dire de t7 à t8 = T = 960 minutes, l'élution du matériau adsorbant de l'adsorbeur 11 B se termine avec la totalité du flux de régénération non chauffé, puis la vanne 116 est fermée pour permettre la repressurisation de l'adsorbeur. L'étape VIII s'achève lorsque la pression de l'adsorbeur 11A a atteint la valeur $P_{ads}$.

Le procédé selon l'invention permet ainsi de fortement limiter les perturbations des teneurs en monoxyde de carbone à la fois du flux du gaz traité issu de l'unité de traitement 11 lorsqu'un adsorbeur commence sa phase d'adsorption (étapes I et IV) et du flux du gaz résiduaire sortant de cette unité de traitement lorsqu'un adsorbeur commence sa phase d'utilisation du gaz de régénération (étape VI).

Ce procédé est de mise en oeuvre facile sur une installation relevant de l'art antérieur, qu'il convient d'équiper de vannes à régulation, telles que les vannes 111, 112, 116 et 118, ainsi que d'au moins une ligne de dérivation telle que la ligne 117.

Bien entendu, bien que basée sur la même idée de dilution du flux issu de l'adsorbeur qui vient de commencer sa phase d'adsorption ou de commencer à être soumis au gaz de régénération avec le flux issu de l'adsorbeur terminant sa phase de régénération, respectivement avec directement le gaz de régénération, la mise en oeuvre des étapes I et IV et celle de l'étape VI sont indépendantes, l'exemple du procédé selon l'invention décrit ci-dessus combinant avantageusement les deux.

Lors de l'étape I ou IV, le pourcentage du débit de mélange gazeux à envoyer à l'adsorbeur qui commence sa phase d'adsorption n'est pas limité à 5% du débit de la ligne d'alimentation 12, comme dans l'exemple développé précédemment. Ce pourcentage est généralement strictement inférieur à 50% du débit de la ligne 12, avantageusement inférieur au tiers du débit de la ligne 12, de préférence compris entre 5 et 20% du débit de la ligne 12.

De la même façon, lors de l'étape VI, le pourcentage du débit de gaz de régénération à envoyer à l'adsorbeur qui commence à être soumis au gaz de régénération n'est pas limité à 10% du débit de la ligne d'évacuation 16, comme dans l'exemple développé précédemment. Ce pourcentage est généralement strictement inférieur à 50% du débit de la ligne 16, avantageusement inférieur au tiers du débit de la ligne 16, de préférence compris entre 5 et 20% du débit de la ligne 16.

En variante au procédé et indépendamment de la valeur du pourcentage des débits mentionnés ci-dessus, la durée de l'étape I ou de l'étape IV peut être prédéterminée de façon à ce qu'elle soit supérieure à environ 1% de la durée de la phase d'adsorption d'un adsorbeur (c'est-à-dire la durée s'étendant de l'étape I à l'étape V sur le cycle de la figure 2), avantageusement supérieure à environ 5% de la durée de cette phase d'adsorption, de préférence comprise entre 10 et 20% de la durée de cette phase d'adsorption.

De la même façon, la durée de l'étape VI peut être prédéterminée de façon à ce qu'elle soit supérieure à environ 1% de la durée de la phase de régénération d'un adsorbeur (c'est-à-dire la durée s'étendant de l'étape VI à VIII), avantageusement supérieure à environ 5% de la durée de cette phase de régénération, de préférence comprise entre 10 et 20% de la durée de cette phase de régénération.

Par ailleurs, bien que décrit ci-dessus avec des adsorbeurs 11 A et 11 B adaptés pour retenir, en tant qu'impuretés, l'eau et le dioxyde de carbone, le procédé selon l'invention s'applique à des unités de traitement avec un matériau adsorbant adapté pour ne fixer préférentiellement que l'eau.

De plus, bien que décrit avec une unité de traitement 11 à uniquement deux adsorbeurs, le procédé selon l'invention s'applique à des unités comportant un plus grand nombre d'adsorbeurs, à fonctionnement individuel ou par groupe, par exemple à fonctionnement par paires. Aussi, le terme "adsorbeur" doit s'entendre comme désignant soit un adsorbeur à marche propre, soit un groupe d'adsorbeurs à marche commune.

Dans le cas d'une unité de traitement à plus de deux adsorbeurs respectivement à fonctionnement individuel, par exemple à trois adsorbeurs qui suivent le même cycle avec un décalage valant sensiblement le tiers de la période du cycle, le procédé selon l'invention s'avère particulièrement avantageux lorsque le traitement par adsorption est effectué, la majeure partie du temps, par un seul adsorbeur en phase d'adsorption (comme lors de l'étape III du cycle de la figure 2). Plus généralement, pour une unité de traitement à N adsorbeurs, avec N supérieur ou égal à 2, qui suivent un cycle de période T, le procédé selon l'invention s'avère avantageux lorsque la durée de la phase d'adsorption de chaque adsorbeur est comprise entre $\frac{T}{N}$ inclus et $\frac{2T}{N}$ non-inclus.

Toujours dans le cas d'une unité à plus de deux adsorbeurs, et à condition que sur un intervalle de temps donné du cycle au moins deux adsorbeurs sont en phase de régénération, le flux issu de l'adsorbeur qui commence à être soumis à une partie du débit du gaz de régénération peut être mélangé avec le reste de ce débit soit directement comme décrit plus haut, soit après que le reste de ce débit ait été envoyé à un autre adsobeur terminant sa phase de régénération. En effet, comme décrit lors de l'étape VII et du début de l'étape VIII du cycle de la figure 2, le flux issu d'un adsorbeur qui est en régénération depuis un certain temps ne présente plus de perturbations significatives de ses teneurs et de son débit. Aussi, ce flux stable peut être utilisé pour diluer le flux issu d'un adsorbeur qui commence à être soumis au gaz de régénération.

Comme représenté sur la figure 5, l'unité de séparation cryogénique peut, en variante, être remplacée par une unité de perméation 20 adaptée pour produire un perméat à ratio hydrogène/monoxyde de carbone prédéterminé, tout en formant un non-perméat envoyé à l'unité de traitement 11 de la même façon que le flux de la conduite 16 pour l'installation 1 de la figure 1. L'installation 21 ainsi formée permet de produire un flux à ratio hydrogène/monoxyde de carbone particulièrement stable dans le temps, le procédé selon l'invention assurant une alimentation de l'unité 20 par la ligne 13 de bonne qualité en termes de stabilité de débit, de teneurs en hydrogène et en monoxyde de carbone, et de température.

En variante non représentée au procédé selon l'invention, le flux issu de l'adsorbeur qui vient de commencer sa phase d'adsorption ou qui vient d'être soumis au gaz de régénération peut être, au moins en partie, envoyé à un réseau de résiduaire pour être valorisé, par exemple en tant que gaz de combustion (« fuel gaz »), notamment si une perte de rendement en hydrogène et/ou en monoxyde de carbone par l'unité aval 14 ou 20 est acceptable.

## Revendications

1. Procédé de traitement par adsorption d'un mélange gazeux comportant au moins un constituant principal à produire et des impuretés à séparer dudit mélange, **caractérisé en ce qu'**on utilise N adsorbeurs (11A, 11 B), avec N supérieur ou égal à deux, qui suivent chacun en décalage un même cycle de période T, durant lequel se succèdent une phase d'adsorption et une phase de régénération, et **en ce qu'**on soumet chaque adsorbeur (11A) en début de phase d'adsorption à seulement une partie du débit nominal du mélange gazeux à traiter, jusqu'à ce que ledit adsorbeur soit sensiblement saturé en au moins un des constituants principaux à produire, tout en maintenant au moins un autre adsorbeur (11 B) en phase d'adsorption.

2. Procédé suivant la revendication 1, **caractérisé en ce que**, pour former le mélange gazeux traité (13), on mélange le flux issu de l'adsorbeur (11 A) soumis à ladite partie avec le flux issu dudit au moins un autre adsorbeur (11 B) en phase d'adsorption.

3. Procédé suivant la revendication 1 ou 2, **caractérisé en ce que** la durée de la phase d'adsorption de chaque adsorbeur (11A, 11 B) est comprise entre $\dfrac{T}{N}$ inclus et $\dfrac{2T}{N}$ non-inclus.

4. Procédé suivant l'une quelconque des revendications précédentes, **caractérisé en ce que** le traitement par adsorption du mélange gazeux est effectué, la majeure partie de l'étape de production, par un seul adsorbeur (11 A, 11 B) en phase d'adsorption.

5. Procédé suivant l'une quelconque des revendications précédentes, **caractérisé en ce que**, après avoir soumis à ladite partie du débit nominal du mélange gazeux à traiter ledit adsorbeur. (11A) en début de phase d'adsorption, on soumet ledit adsorbeur à une étape de mise en parallèle durant laquelle le débit de gaz traité est obtenu pour moitié par ledit adsorbeur (11 A) et pour moitié par ledit au moins un autre adsorbeur (11 B) en phase d'adsorption.

6. Procédé de traitement par adsorption d'un mélange gazeux comportant au moins un constituant principal à produire et des impuretés à séparer dudit mélange, **caractérisé en ce qu'**on utilise N adsorbeurs (11A, 11 B), avec N supérieur ou égal à deux, qui suivent chacun en décalage un même cycle de période T, durant lequel se succèdent une phase d'adsorption et une phase de régénération utilisant un gaz de régénération, et **en ce qu'**on soumet chaque adsorbeur (11A) en début d'utilisation du gaz de régénération à seulement une partie du débit nominal du gaz de régénération, jusqu'à ce que ledit adsorbeur soit sensiblement déchargé en au moins un des constituants principaux à produire.

7. Procédé suivant la revendication 6, **caractérisé en ce que**, pour former un flux gazeux évacué (2), on mélange le flux issu de l'adsorbeur (11A) soumis à ladite partie avec le reste du débit nominal du gaz de régénération.

8. Procédé suivant la revendication 7, **caractérisé en ce que** le flux issu de l'adsorbeur (11A) soumis à ladite partie et le reste du débit nominal du gaz de régénération sont directement mélangés.

9. Procédé suivant la revendication 7, **caractérisé en ce que** le flux issu de l'adsorbeur (11A) soumis à ladite partie est mélangé avec le flux issu d'un autre adsorbeur qui termine sa phase de régénération et qui est soumis à au moins une partie du reste du débit nominal de gaz de régénération.

10. Procédé suivant l'une quelconque des revendications 6 à 9, **caractérisé en ce que** la phase de régénération de chaque adsorbeur (11A, 11 B) comporte une étape de dépressurisation et une étape de repressurisation dudit adsorbeur.

11. Procédé suivant l'une quelconque des revendications 6 à 10, **caractérisé en ce que** la phase de régénération de chaque adsorbeur (11 A, 11 B) comporte une étape de chauffage du gaz de régénération.

12. Procédé suivant l'une quelconque des revendications 1 à 5 et/ou l'une quelconque des revendications 6 à 11, **caractérisé en ce que** ladite partie du débit nominal du mélange gazeux à traiter, respectivement du débit nominal du gaz de régénération, est strictement inférieure à la moitié du débit nominal du mélange gazeux à traiter, respectivement du débit nominal du gaz de régénération.

13. Procédé suivant la revendication 12, **caractérisé en ce que** ladite partie du débit nominal du mélange gazeux à traiter, respectivement du débit nominal du gaz de régénération, est inférieure au tiers du débit nominal du mélange gazeux à traiter, respectivement du débit nominal du gaz de régénération.

14. Procédé suivant la revendication 13, **caractérisé en ce que** ladite partie du débit nominal du mélange gazeux à traiter, respectivement du débit nominal du gaz de régénération, est comprise entre 5 et 20% du débit nominal du mélange gazeux à traiter, respectivement du débit nominal du gaz de régénération.

15. Procédé suivant l'une des revendications 1 à 5 et/ou l'une quelconque des revendications 6 à 11, ou suivant l'une quelconque des revendications 12 à 14, **caractérisé en ce que** ladite partie du débit nominal du mélange gazeux à traiter, respectivement du débit nominal du gaz de régénération, est soumise, en début de phase d'adsorption, respectivement en début d'utilisation du gaz de régénération, à l'adsorbeur correspondant, pendant une durée supérieure à environ 1 % de celle de la phase d'adsorption, respectivement à environ 1% de celle de la phase de régénération, dudit adsorbeur correspondant.

**16.** Procédé suivant la revendication 15, **caractérisé en ce que** ladite durée est supérieure à environ 5% de celle de la phase de d'adsorption, respectivement à environ 5% de celle de la phase de régénération.

**17.** Procédé suivant la revendication 16, **caractérisé en ce que** ladite durée est comprise entre 10 et 20% de celle de la phase d'adsorption, respectivement entre 10 et 20% de celle de la phase de régénération.

**18.** Procédé suivant l'une des revendications précédentes, **caractérisé en ce que** ledit mélange gazeux comporte, comme constituants principaux, l'hydrogène et le monoxyde de carbone, les impuretés à éliminer comportant de l'eau et du dioxyde de carbone, et **en ce qu'**on sépare de façon cryogénique le mélange gazeux traité en un flux de monoxyde de carbone sensiblement pur et en un flux à forte teneur en hydrogène.

**19.** Procédé suivant l'une des revendications 1 à 17, **caractérisé en ce que** ledit mélange gazeux comporte, comme constituants principaux, l'hydrogène et le monoxyde de carbone, les impuretés à éliminer comportant de l'eau et du dioxyde de carbone, et **en ce qu'**on sépare par perméation le mélange gazeux traité en un flux à ratio hydrogène/monoxyde de carbone prédéterminé et en un flux à forte teneur en hydrogène.

**Claims**

**1.** Adsorption process for the treatment of a gas mixture comprising at least one main constituent to be produced and impurities to be separated from said mixture, **characterized in that** N adsorbers (11A, 11B) are used, where N is greater than or equal to 2, each following in an offset manner the same cycle of period T, during which there are in succession an adsorption phase and a regeneration phase, and **in that** each adsorber (11A) at the start of the adsorption phase is subjected to only a portion of the nominal flow of the gas mixture to be treated, until said adsorber is substantially saturated with at least one of the main constituents to be produced, while maintaining at least one other adsorber (11B) in adsorption phase.

**2.** Process according to Claim 1, **characterized in that**, in order to form the treated gas mixture (13), the stream coming from the adsorber (11A) subjected to said portion is mixed with the stream coming from said at least one other adsorber (11B) in adsorption phase.

**3.** Process according to Claim 1 or 2, **characterized in that** the duration of the adsorption phase of each adsorber (11A, 11B) is between T/N inclusive and 2T/N noninclusive.

**4.** Process according to any one of the preceding claims, **characterized in that** the adsorption treatment of the gas mixture - the major part of the production step - is carried out by a single adsorber (11A, 11B) in adsorption phase.

**5.** Process according to any one of the preceding claims, **characterized in that**, after said adsorber (11A) has been subjected at the start of the adsorption phase to said portion of the nominal flow of the gas mixture to be treated, said adsorber is subjected to a paralleling step, during which the flow of treated gas is obtained half by said adsorber (11A) and half by said at least one other adsorber (11B) in adsorption phase.

**6.** Adsorption process for the treatment of a gas mixture comprising at least one main constituent to be produced and impurities to be separated from said mixture, **characterized in that** N adsorbers (11A, 11B) are used, where N is greater than or equal to two, each following in an offset manner the same cycle of period T, during which there are in succession an adsorption phase and a regeneration phase using a regeneration gas, and **in that** each adsorber (11A) is subjected at the start of use of the regeneration gas to only a portion of said nominal flow of the regeneration gas, until said absorber is substantially discharged of at least one of the main constituents to be produced.

**7.** Process according to Claim 6, **characterized in that**, in order to form a discharged gas stream (2), the stream coming from the adsorber (11A) subjected to said portion is mixed with the rest of the nominal flow of the regeneration gas.

**8.** Process according to Claim 7, **characterized in that** the stream coming from the adsorber (11A) subjected to said portion and the rest of the nominal flow of the regeneration gas are mixed together directly.

**9.** Process according to Claim 7, **characterized in that** the stream coming from the adsorber (11A) subjected to said portion is mixed with the stream coming from another adsorber that terminates its regeneration phase and that is subjected to at least a portion of the rest of the nominal flow of regeneration gas.

**10.** Process according to any one of Claims 6 to 9, **characterized in that** the regeneration phase of each adsorber (11A, 11B) comprises a step of depressurizing and a step of repressurizing said adsorber.

**11.** Process according to any one of Claims 6 to 10, **characterized in that** the phase of regenerating each adsorber (11A, 11B) comprises a step of heating the regeneration gas.

**12.** Process according to any one of Claims 1 to 5 and/or any one of claims 6 to 11, **characterized in that** said portion of the nominal flow of the gas mixture to be treated, or alternatively of the nominal flow of the regeneration gas, is strictly less than one half of the nominal flow of the gas mixture to be treated, or alternatively of the nominal flow of the regeneration gas.

**13.** Process according to Claim 12, **characterized in that** said portion of the nominal flow of the gas mixture to be treated, or alternatively of the nominal flow of the regeneration gas, is less than one third of the nominal flow of the gas mixture to be treated, or alternatively of the nominal flow of the regeneration gas.

**14.** Process according to Claim 13, **characterized in that** said portion of the nominal flow of the gas mixture to be treated, or alternatively of the nominal flow of the regeneration gas, is between 5 and 20% of the nominal flow rate of the gas mixture to be treated, or alternatively of the nominal flow of the regeneration gas.

**15.** Process according to one of Claims 1 to 5 and/or any one of Claims 6 to 11, or according to any one of Claims 12 to 14, **characterized in that** said portion of the nominal flow of the gas mixture to be treated, or alternatively of the nominal flow of the regeneration gas, is subjected, at the start of the adsorption phase, or alternatively at the start of use of the regeneration gas, to the corresponding adsorber, for a time greater than about 1% of that of the adsorption phase, or alternatively greater than about 1% of that of the regeneration phase, of said corresponding adsorber.

**16.** Process according to Claim 15, **characterized in that** said duration is greater than about 5% of that of the adsorption phase, or alternatively greater than about 5% of that of the regeneration phase.

**17.** Process according to Claim 16, **characterized in that** said duration is between 10 and 20% of that of the adsorption phase, or alternatively between 10 and 20% of that of the regeneration phase.

**18.** Process according to one of the preceding claims, **characterized in that** said gas mixture comprises, as main constituents, hydrogen and carbon monoxide, the impurities to be removed comprising water and carbon dioxide, and **in that** the treated gas mixture is separated cryogenically into a stream of substantially pure carbon monoxide and into a stream having a high hydrogen content.

**19.** Process according to one of claims 1 to 17, **characterized in that** said gas mixture comprises, as main constituents, hydrogen and carbon monoxide, the impurities to be removed comprising water and carbon dioxide, and **in that** the treated gas mixture is separated by permeation into a stream with a predetermined hydrogen/carbon monoxide ratio and into a stream with a high hydrogen content.

**Patentansprüche**

**1.** Verfahren zur Behandlung eines Gasgemisches, das mindestens einen Hauptbestandteil, der zu erzeugen ist, und Verunreinigungen, die von dem Gasgemisch zu trennen sind, umfasst, durch Adsorption, **dadurch gekennzeichnet, dass** N Adsorber (11A, 11B), mit N größer oder gleich zwei, verwendet werden, die jeweils versetzt dem gleichen Zyklus mit der Periode T folgen, während dem eine Adsorptionsphase und eine Regenerationsphase aufeinander folgen, und **dadurch**, dass jeder Adsorber (11A) zu Beginn der Adsorptionsphase nur einem Teil des Nenndurchsatzes des zu behandelnden Gasgemisches ausgesetzt wird, bis der Adsorber mit mindestens einem der Hauptbestandteile, die zu erzeugen sind, im Wesentlichen gesättigt ist, wobei gleichzeitig mindestens ein weiterer Adsorber (11B) in der Adsorptionsphase gehalten wird.

**2.** Verfahren nach Anspruch 1, **dadurch gekennzeichnet, dass**, um das behandelte Gasgemisch (13) zu bilden, der Strom, der von dem Adsorber (11A) kommt, der dem Teil ausgesetzt ist, mit dem Strom, der von dem mindestens einen weiteren Adsorber (11B) in der Adsorptionsphase kommt, gemischt wird.

**3.** Verfahren nach Anspruch 1 oder 2, **dadurch gekennzeichnet, dass** die Dauer der Adsorptionsphase jedes Adsorbers (11A, 11B) im Bereich zwischen einschließlich T/N und ausschließlich 2T/N enthalten ist.

**4.** Verfahren nach einem der vorhergehenden Ansprüche, **dadurch gekennzeichnet, dass** die Adsorptionsbehandlung des Gasgemisches während des Hauptteils des Erzeugungsschrittes mittels eines einzigen Adsorbers (11A, 11B) in der Adsorptionsphase durchgeführt wird.

**5.** Verfahren nach einem der vorhergehenden Ansprüche, **dadurch gekennzeichnet, dass**, nachdem der Adsorber (11A) zu Beginn der Adsorptionsphase dem Teil des Nenndurchsatzes des zu behandelnden Gasgemisches ausgesetzt wurde, er einem Parallelschaltungsschritt unterworfen wird, während dem der Durchsatz des behandelten Gases zur Hälfte mittels des Adsorbers (11A) und zur Hälfte mittels mindestens eines weiteren Adsorbers (11B) in der Adsorptionsphase erzielt wird.

6.  Verfahren zur Behandlung eines Gasgemisches, das mindestens einen Hauptbestandteil, der zu erzeugen ist, und Verunreinigungen, die von dem Gasgemisch zu trennen sind, umfasst, durch Adsorption, **dadurch gekennzeichnet, dass** N Adsorber (11A, 11B), mit N größer oder gleich zwei, verwendet werden, die jeweils versetzt dem gleichen Zyklus mit der Periode T folgen, während dem eine Adsorptionsphase und eine Regenerationsphase, die ein Regenerationsgas verwendet, aufeinander folgen, und **dadurch**, dass jeder Adsorber (11A) zu Beginn der Verwendung des Regenerationsgases nur einem Teil des Nenndurchsatzes des Regenerationsgases ausgesetzt wird, bis er von mindestens einem der Hauptbestandteile, die zu erzeugen sind, im Wesentlichen befreit ist.

7.  Verfahren nach Anspruch 6, **dadurch gekennzeichnet, dass**, um einen Ableitungsgasstrom (2) zu bilden, der Strom, der von dem Adsorber (11A) kommt, der dem Teil ausgesetzt ist, mit dem Rest des Nenndurchsatzes des Regenerationsgases gemischt wird.

8.  Verfahren nach Anspruch 7, **dadurch gekennzeichnet, dass** der Strom, der von dem Adsorber (11A) kommt, der dem Teil ausgesetzt ist, und der Rest des Nenndurchsatzes des Regenerationsgases direkt gemischt werden.

9.  Verfahren nach Anspruch 7, **dadurch gekennzeichnet, dass** der Strom, der von dem Adsorber (11A) kommt, der dem Teil ausgesetzt ist, mit dem Strom gemischt wird, der von einem anderen Adsorber kommt, der seine Regenerationsphase beendet und der mindestens einem Teil des Rests des Nenndurchsatzes des Regenerationsgases ausgesetzt wird.

10.  Verfahren nach einem der Ansprüche 6 bis 9, **dadurch gekennzeichnet, dass** die Regenerationsphase jedes Adsorbers (11A, 11B) einen Schritt der Druckminderung und einen Schritt der erneuten Druckbeaufschlagung des Adsorbers umfasst.

11.  Verfahren nach einem der Ansprüche 6 bis 10, **dadurch gekennzeichnet, dass** die Regenerationsphase jedes Adsorbers (11A, 11B) einen Schritt des Erwärmens des Regenerationsgases umfasst.

12.  Verfahren nach einem der Ansprüche 1 bis 5 und/ oder einem der Ansprüche 6 bis 11, **dadurch gekennzeichnet, dass** der Teil des Nenndurchsatzes des zu behandelnden Gasgemisches bzw. des Nenndurchsatzes des Regenerationsgases streng kleiner als die Hälfte des Nenndurchsatzes des zu behandelnden Gasgemisches bzw. des Nenndurchsatzes des Regenerationsgases ist.

13.  Verfahren nach Anspruch 12, **dadurch gekennzeichnet, dass** der Teil des Nenndurchsatzes des zu behandelnden Gasgemisches bzw. des Nenndurchsatzes des Regenerationsgases kleiner als ein Drittel des Nenndurchsatzes des zu behandelnden Gasgemisches bzw. des Nenndurchsatzes des Regenerationsgases ist.

14.  Verfahren nach Anspruch 13, **dadurch gekennzeichnet, dass** der Teil des Nenndurchsatzes des zu behandelnden Gasgemisches bzw. des Nenndurchsatzes des Regenerationsgases im Bereich zwischen 5 und 20% des Nenndurchsatzes des zu behandelnden Gasgemisches bzw. des Nenndurchsatzes des Regenerationsgases ist.

15.  Verfahren nach einem der Ansprüche 1 bis 5 und/ oder einem der Ansprüche 6 bis 11 oder nach einem der Ansprüche 12 bis 14, **dadurch gekennzeichnet, dass** der Teil des Nenndurchsatzes des zu behandelnden Gasgemisches bzw, des Nenndurchsatzes des Regenerationsgases zu Beginn der Adsorptionsphase bzw. zu Beginn der Verwendung des Regenerationsgases während einer Dauer, die länger als ungefähr 1% von jener der Adsorptionsphase bzw. ungefähr 1% von jener der Regenerationsphase des entsprechenden Adsorbers ist, dem entsprechenden Adsorber ausgesetzt wird.

16.  Verfahren nach Anspruch 15, **dadurch gekennzeichnet, dass** die Dauer länger als ungefähr 5% von jener der Adsorptionsphase bzw. ungefähr 5% von jener der Regenerationsphase ist.

17.  Verfahren nach Anspruch 16, **dadurch gekennzeichnet, dass** die Dauer im Bereich zwischen 10 und 20% von jener der Adsorptionsphase bzw. zwischen 10 und 20% von jener der Regenerationsphase ist.

18.  Verfahren nach einem der vorhergehenden Ansprüche, **dadurch gekennzeichnet, dass** das Gasgemisch als Hauptbestandteile Wasserstoff und Kohlenmonoxid umfasst, die zu entfernenden Verunreinigungen Wasser und Kohlendioxid umfassen, und **dadurch**, dass das behandelte Gasgemisch kryogen in einen im Wesentlichen reinen Kohlenmonoxidstrom und in einen Strom mit einem hohen Wasserstoffgehalt getrennt wird.

**19.** Verfahren nach einem der Ansprüche 1 bis 17, **dadurch gekennzeichnet, dass** das Gasgemisch als Hauptbestandteile Wasserstoff und Kohlenmonoxid umfasst, die zu entfernenden Verunreinigungen Wasser und Kohlendioxid umfassen, und **dadurch**, dass das behandelte Gasgemisch durch Permeation in einen Strom mit einem festgelegten Wasserstoff/Kohlenmonoxid-Verhältnis und in einen Strom mit einem hohen Wasserstoffgehalt getrennt wird.

**FIG.1**

**FIG.5**

*FIG.2*

EP 1 458 461 B1

_FIG.3_

_FIG.4_